# EUROPEAN PATENT APPLICATION

(11) **EP 0 754 590 A2**
(43) Date of publication of application: **22.01.1997**
(21) Application number: 96830228.1
(22) Date of filing: 22.04.1996
(51) Int. Cl.: B60N 2/44

(54) **Motor-vehicle seat**

(30) Priority: 19.07.1995 IT TO950618
(71) Applicant: LEAR CORPORATION ITALIA S.p.A., 10128 Torino (IT)
(72) Inventor: Dal Monte, Antonio, 00196 Roma (IT)
(74) Representative: Notaro, Giancarlo

(57) **Abstract**

There is described a motor-vehicle seat whose backrest (3) is provided with a padding module (50) which can be connected rapidly to the supporting body (4) of the seat and includes a skeleton (52) with a flexible arched spine (57), with adjustable arching, and strengthening transverse ribs (58).

## Description

The present invention relates to motor-vehicle seats.

In recent years more and more research has been directed towards seats which on one hand are able to be adapted in the best possible way to the specific features of the body of the user to ensure an ergonomically proper posture and which on the other hand have a relatively simple and light structure, characterized by the possibility of rapidly replacing the padding portion of the seat in order to rationalize and simplify the mass production of different seat models, as well as to enable the user to replace easily the padding when the latter is damaged or worn.

In view of achieving these objects, the present invention provides a motor-vehicle seat, comprising: a backrest, having a supporting structure and a padding module releasably mounted on said supporting structure by quick coupling means, characterized in that said module includes a supporting skeleton and a padding provided with a cover and mounted onto the supporting skeleton, and in that said supporting skeleton includes a flexible arched spine, whose arched configuration is adjustable, and a plurality of substantially rigid transverse ribs adapted to keep the configuration of the padding module substantially constant in a cross-section lying in a horizontal plane, said seat further comprising flexible cable control means to cause arching of said spine.

Due to said features, the advantage is achieved to allow rapid mounting and dismantling, or replacing, of the backrest padding and on the other hand an optimum adjustment is obtained of the arching of the backrest in order to provide adequate support to the user's back, particularly at the lumbar area. The use of the strengthening transverse ribs however keeps the geometry of the backrest substantially constant with respect to a cross section in a horizontal plane, while the degree of arching of the spine of said skeleton of the padding module is varied.

In a preferred embodiment of the present invention, the backrest supporting structure is constituted by a tray-shaped body with a cavity facing forwardly, which receives said padding module as well as, at its upper portion, a head-rest, preferably provided with a novel adjustment device which forms the subject of a co-pending application of the same Applicant. This body is formed for example by a one-piece structure of a light alloy.

In said preferred embodiment, between said backrest supporting structure and said padding module there are interposed spring means. Preferably, these spring means are comprised of a plurality of pairs of helical springs, the springs of each pair being supported in a cantilever fashion by the backrest supporting structure and the padding module, respectively, and being adapted to engage with each other concentrically with a forced fit, so as to form said quick coupling means while fulfilling the function of a suspension for the padding module. In this case, said springs are preferably each provided with a covering sheath, to prevent jamming between their respective loops in the condition of mutual engagement of the springs of each pair.

Yet in said embodiment, said flexible cable control means for the arching of the skeleton of the padding module comprise a flexible cable arranged so as to tend to move the ends of said spine towards each other when said cable is put under tension. Also in this case there is provided a device for controlling tension of said cable, including a screw-and-nut mechanism controlled either by a control knob or an actuating electric motor.

In a possible variant, said padding module is supported by said backrest supporting structure so as to be movable in a substantially vertical direction with respect to said supporting structure and there are provided spring means to bias the padding module downwardly and flexible cable control means to cause a movement of said module upwardly, against the action of said spring means. In this manner, it is possible to adjust the position of the whole padding module along the vertical direction, in order to adapt it to the various possible configurations of the body of the user.

In the case of the cited example, in which there are provided said concentric springs to constitute both the suspension of the padding module and the quick coupling means for coupling the padding module to the backrest supporting structure, these springs also allow, due to their flexibility, some displacement along the vertical direction of the whole padding module.

A further advantage of the above described arrangement lies in that the conventional body of foamed material constituting the seat padding, connected to said skeleton, may be of a very reduced thickness, so as to favour transpirability of the seat and thus having a greater ability of absorbing transpiration. The reduction of the quantity of foamed material used in the padding also provides for a lighter overall unit and poses less problems with respect to disposal or recycling of this foamed material at the end of the life of the seat.

As it is clearly apparent from the foregoing description, all the said advantages are obtained with an extremely simple and unexpensive structure which nevertheless is efficient and reliable.

In order to provide for an optimum adaptation of the seat cushion to the features of the seated person, this cushion has a front portion divided into two separate portions by a middle longitudinal slit, said separate portions being separately adjustable in height by means of two respective control devices. In one embodiment, each of said portions has a structure which is arched upwardly in its undeformed condition, which can be elastically deflected downwardly by the respective control device which for example is of the flexible cable type.

Further features and advantages of the invention will become apparent from the description which follows with reference to the annexed drawings, given purely by way of non limiting example, in which:
- figure 1 is a perspective view of a preferred embodiment of the seat according to the invention,
- figure 2 is a perspective rear view of the padding module of the backrest, shown in a dismantled condition,
- figure 3 is a cross-sectional view taken along line III-III of figure 2,
- figure 4 is a cross-sectional view taken along line IV-IV of figure 3,
- figure 5 is a cross-sectional view at an enlarged scale of a detail of figure 4, and
- figure 6 is a perspective view at an enlarged scale of a detail of the cushion of the seat of figure 1.

In the drawings, reference numeral 1 generally designates a motor-vehicle seat, particularly (but not exclusively) for the driving seat, comprising a cushion 2 and a backrest 3 having a supporting structure 4 which, in the illustrated embodiment, is comprised of a body in one piece, preferably of a light alloy, e.g. of a magnesium alloy, shaped as a tray (see figure 4) with a cavity 5 facing forwardly (see again figure 4) which receives the backrest 3 as well as at its extreme upper portion the head-rest 6, which preferably is provided with a novel adjustment system which forms the subject of a co-pending patent application of the same Applicant.

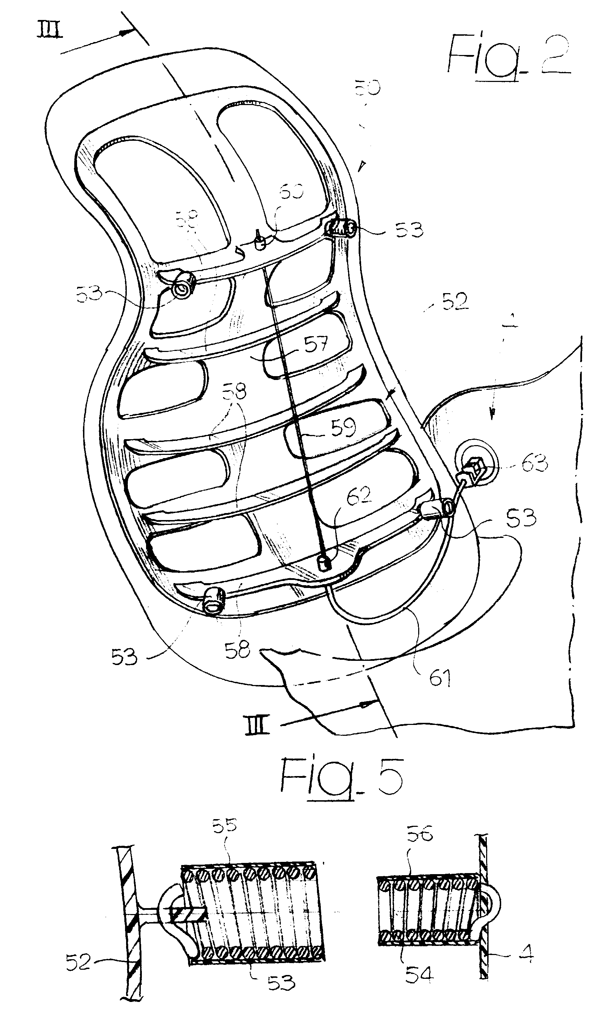

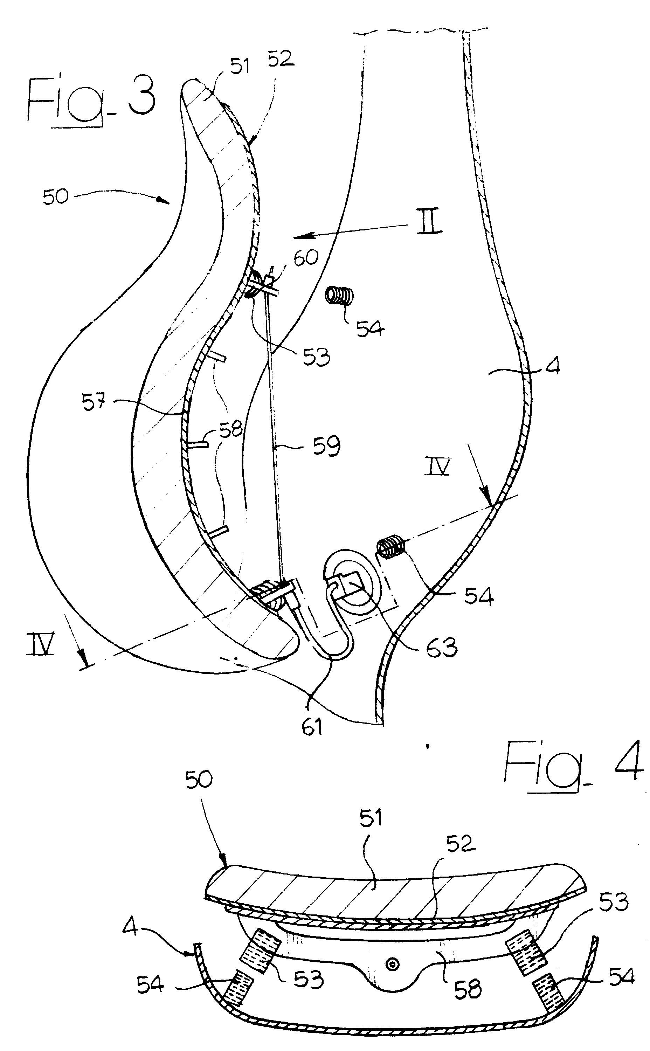

With reference now to figures 2-5, the backrest 3 of the seat according to the invention has a padding module 50, which can be connected rapidly to the supporting body 4 of the backrest.

The padding module 50 comprises a padding 51 constituted by a thin mat of foamed plastic material, provided with a covering textile or the like and incorporating a supporting skeleton 52, e.g. constituted of a light alloy, provided with means for quick coupling to body 4.

In the illustrated embodiment, said quick coupling means are comprised of four pairs of helical springs 53, 54, springs 53, 54 of each pair being supported in a cantilever fashion (see in particular figure 9) by skeleton 52 and body 4 respectively and being able to engage within each other coaxially with a forced fit to connect padding module 50 to supporting body 4. As illustrated in figure 9, springs 53, 54 are preferably provided with a cover of plastic material 55, 56, in order to prevent a mutual jamming of the loops of the springs in the engagement condition. Due to the above described arrangement, springs 53, 54 fulfil both the function of quick coupling means for coupling the padding module 50 to the supporting body 4, and the function of elastic suspension means interposed between the padding module 50 and body 4.

As it is clearly apparent from the drawings, skeleton 52 is provided so as to have a flexible arched spine 57, whose arching is adjustable, extending centrally throughout the vertical extension of skeleton 52. At the same time, the skeleton 52 includes a plurality of transverse ribs 58 which are relatively rigid, which contribute to keep the configuration of skeleton 52, and hence that of padding module 51 with respect to a cross-section lying in a horizontal plane substantially constant. The arching of spine 57 may be adjusted by a flexible cable 59 having one end 60 connected to an upper rib 58 of the skeleton and provided with a sheath 61 whose end 62 is fixed to a lower rib 58. Cable 59 may be put under tension by a conventional screw-and-nut mechanism controlled by knob 64 (figure 4) arranged on the left side of body 4, in order to increase the arching of spine 57. By rotating knob 64 in an opposite direction, cable 59 is loosened thus allowing skeleton 52 to return towards its undeformed condition, with a minimum arching.

The above described adjustment movement allows the padding module to be adapted to various configurations of the back of the user, to ensure a proper support particularly at the lumbar area.

The above described particular arrangement of concentric springs 53, 54 also allows some movement of the whole padding module 50 in the vertical direction, due to the possibility of the whole body of each spring to be deflected. This possibility can be exploited, in a variant of the illustrated embodiment, to add adjustment mode to the backrest. According to this solution, skeleton 52 is for example connected at its lower part to a return spring (of the type as spring 22 of figure 4) anchored at its opposite end to the body of the backrest, so as to bias downwardly the whole padding module. The latter can be moved upwardly by a further flexible cable control device connected to the upper portion of skeleton 52 and arranged so as to bias this skeleton upwardly when the cable is put under tension.

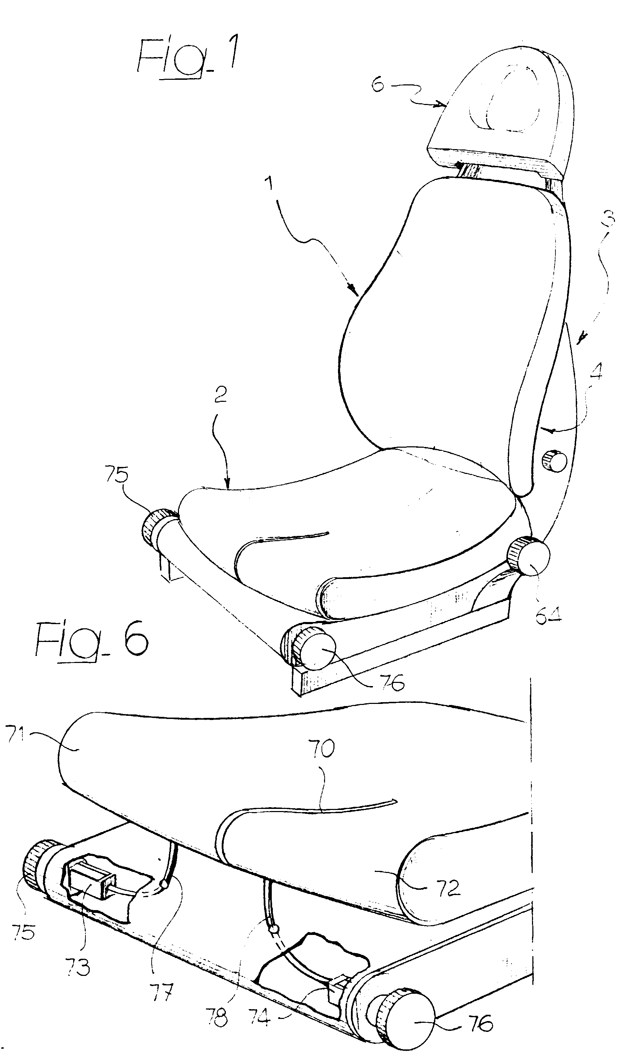

With reference also to figures 1, 8, a further preferred feature of the seat according to the invention lies in that the seat 2 has at its front portion a middle longitudinal slit 70 which defines two separate portions 71, 72, each of which has a flexible supporting structure (not visible in the drawings) which is slightly arched upwardly in its undeformed condition. Starting from this condition, each of the two structures 71, 72 may be deflected downwardly by a respective screw-and-nut control device 73, 74, controlled by a respective knob 75, 76 (or an actuating electric motor) to put a respective control flexible cable 77, 78 under tension. This arrangement allows the two portions 71, 72 to be independently adjusted at the various heights, as a function of the support required by the right and left thigh respectively of the user, as a function of the assumed posture, for example during driving.

Naturally, while the principle of the invention remains the same, the details of construction and the embodiments may widely vary with respect to what has been described and illustrated purely by way of example, without departing from the scope of the present invention.

## Claims

1. Motor-vehicle seat, comprising a backrest (3), having a supporting structure (4), and a padding module releasably mounted on said supporting structure by quick coupling means (53, 54) characterized in that said module (50) includes one supporting skeleton (52) and a padding provided with a cover mounted onto the supporting skeleton (52), and in that said supporting skeleton (52) includes a flexible arched spine (57), whose arching is adjustable, and a plurality of substantially rigid transverse ribs (58), able to keep the configuration of the padding module (50) in a cross section lying in a horizontal plane substantially constant, said seat further comprising flexible cable control means (60-63) for causing arching of said spine (57).

2. Seat according to claim 1, characterized in that between said supporting structure (4) of the backrest (3) and said padding module (50) there are interposed spring means (53, 54).

3. Seat according to claim 2, characterized in that said spring means are comprised of a plurality of pairs of helical springs (53, 54), the springs (53, 54) of each pair being supported in a cantilever fashion by the backrest supporting structure (4) and the padding module (50, 52) respectively and being able to engage concentrically and with a forced fit one within the other, so as to form said quick coupling means while fulfilling the function of suspension for the padding module (50).

4. Seat according to claim 3, characterized in that said springs (53, 54) are provided each with a covering sheath (55, 56) to prevent jamming of the respective loops in the condition of mutual engagement of the springs (53, 54) of each pair.

5. Seat according to claim 1, characterized in that said flexible cable control means (60-63) comprise a flexible cable (59) arranged so as to move the ends of said spine (57) towards each other when said cable (59) is put under tension.

6. Seat according to claim 5, characterized in that there is provided a control device for tensioning of said cable (59), including a screw-and-nut mechanism (63).

7. Seat according to claim 6, characterized in that said screw-and-nut mechanism (63) is controlled by a control knob (64).

8. Seat according to claim 6, characterized in that said screw-and-nut mechanism (63) is controlled by an actuating electric motor.

9. Seat according to claim 1, characterized in that said padding module (50) is supported by said supporting structure (4) of the backrest (3) so as to be movable in a substantially vertical direction with respect to said supporting structure (4), and in that there are provided spring means to bias the padding module (50) downwardly and flexible cable control means to cause a movement of said module upwardly, against the action of said spring means.

10. Seat according to claim 1, characterized in that said supporting structure of the backrest is constituted by a tray-shaped body (4) with a cavity facing forwardly, which receives said padding module (50) and the head-rest of the backrest (3).

11. Seat according to claim 10, characterized in that said body is constituted of a light alloy.

12. Seat according to claim 1, characterized in that it has a cushion which at its front portion has a middle longitudinal slit which defines two separate front portions (71, 72), which are flexible and slightly arched upwardly in their undeformed condition, said portions being deflectable downwardly by means of respective flexible cable control devices (77, 78) to adjust the position in height of said front portions (71, 72) of the cushion separately.
